# EUROPEAN PATENT APPLICATION

(11) **EP 4 086 995 A1**
(43) Date of publication of application: **09.11.2022**
(21) Application number: 21753076.5
(22) Date of filing: 29.01.2021
(51) Int. Cl.: H01M 10/04, H01M 50/147, H01M 50/172, H01M 50/531, H01M 50/543

(54) **SECONDARY BATTERY**

(30) Priority: 12.02.2020 JP 2020021355
(71) Applicant: Murata Manufacturing Co., Ltd., Nagaokakyo-shi, Kyoto 617-8555 (JP)
(72) Inventor: KATSUMOTO, Taichi, Nagaokakyo-shi, Kyoto 617-8555 (JP); HORIKOSHI, Yoshiichi, Nagaokakyo-shi, Kyoto 617-8555 (JP); KAGEYAMA, Masayuki, Nagaokakyo-shi, Kyoto 617-8555 (JP)
(74) Representative: Witte, Weller & Partner Patentanwälte mbB
(86) International application number: PCT/JP2021/003272
(87) International publication number: WO 2021/161812

(57) **Abstract**

A secondary battery includes a battery device, a container member, a cover member, and an electrode terminal. The battery device includes a positive electrode and a negative electrode. The container member contains the battery device inside. The cover member is welded to the container member. The electrode terminal is provided in the cover member. The cover member includes a recessed part formed by the cover member bending to protrude in part toward the inside of the container member. The electrode terminal is disposed inside the recessed part.

## Description

### Technical Field

The technology relates to a secondary battery.

### Background Art

Various kinds of electronic equipment, including mobile phones, have been widely used. Such widespread use has promoted development of a secondary battery as a power source that is smaller in size and lighter in weight and allows for a higher energy density. The secondary battery includes a positive electrode, a negative electrode, and an electrolytic solution.

Consideration has been given in various ways regarding a configuration of the secondary battery. Specifically, in order to suppress a rise in contact resistance between a current collector and a terminal while suppressing a decrease in internal space efficiency of a battery, the terminal is provided to penetrate a cover part of a battery case and to extend through an insertion hole provided in the current collector, with a packing interposed at a portion of a joint part between the current collector and the terminal (for example, see PTL 1). Further, in order to achieve a reduction in thickness of a battery and keep an electrode body stably in position, a thickness of an outer package can is made smaller in part than a thickness of the electrode body (for example, see PTL 2).

### Citation List

### Patent Literature

PTL 1: Japanese Unexamined Patent Application Publication No. 2014-096374
PTL 2: Japanese Unexamined Patent Application Publication No. 2015-130317

### Summary of the Invention

Although consideration has been given in various ways regarding a configuration of a secondary battery, the secondary battery has not yet achieved a sufficient energy density or sufficient manufacturing stability, and there is still room for improvement in terms thereof.

The technology has been made in view of such an issue and it is an object of the technology to provide a secondary battery that makes it possible to achieve both an increased energy density and improved manufacturing stability.

A secondary battery according to one embodiment of the technology includes a battery device, a container member, a cover member, and an electrode terminal. The battery device includes a positive electrode and a negative electrode. The container member contains the battery device inside. The cover member is welded to the container member. The electrode terminal is provided in the cover member. The cover member includes a recessed part formed by the cover member bending to protrude in part toward the inside of the container member. The electrode terminal is disposed inside the recessed part.

According to the secondary battery of the embodiment of the technology, the battery device is contained inside the container member, and the cover member is welded to the container member. Further, the cover member bends to protrude in part toward the inside of the container member to thereby form the recessed part, and the electrode terminal is disposed inside the recessed part. This makes it possible to achieve both an increased energy density and improved manufacturing stability.

Note that effects of the technology are not necessarily limited to those described above and may include any of a series of effects described below in relation to the technology.

### Brief Description of Drawings

[FIG. 1] FIG. 1 is a perspective view of a configuration of a secondary battery according to one embodiment of the technology.
[FIG. 2] FIG. 2 is an enlarged sectional view of the configuration of the secondary battery illustrated in FIG. 1.
[FIG. 3] FIG. 3 is a perspective view of a configuration of a battery device illustrated in FIG. 1.
[FIG. 4] FIG. 4 is an enlarged sectional view of a configuration of an electrode terminal illustrated in FIG. 2.
[FIG. 5] FIG. 5 is a perspective view of a configuration of a battery can to be used in a process of manufacturing the secondary battery.
[FIG. 6] FIG. 6 is a sectional view of a configuration of a secondary battery of a comparative example.
[FIG. 7] FIG. 7 is a sectional view of a configuration of a secondary battery of Modification 2.
[FIG. 8] FIG. 8 is a sectional view of a configuration of a secondary battery of Modification 5.
[FIG. 9] FIG. 9 is a sectional view of a configuration of a secondary battery of Modification 6.
[FIG. 10] FIG. 10 is a sectional view of a configuration of a secondary battery of Modification 7.
[FIG. 11] FIG. 11 is a perspective view of a configuration of a battery device illustrated in FIG. 10.
[FIG. 12] FIG. 12 is a sectional view of a configuration of a secondary battery of Modification 9.
[FIG. 13] FIG. 13 is a sectional view of a configuration of a secondary battery of Modification 10.

### Modes for Carrying Out the Invention

Some embodiments of the technology are described below in detail with reference to the drawings. The description is given in the following order.
1. Secondary Battery
   1-1. Configuration
   1-2. Operation
   1-3. Manufacturing Method
   1-4. Action and Effects
2. Modifications

### <1. Secondary Battery>

A description is given first of a secondary battery according to one embodiment of the technology.

A battery structure of the secondary battery is not particularly limited. The secondary battery described here is one having a flat and columnar three-dimensional shape, and more specifically, a secondary battery having a battery structure of a type called, for example, a coin type or a button type. As will be described later, the secondary battery includes two bottom parts opposed to each other, and a sidewall part lying between the two bottom parts. This secondary battery has a height smaller than an outer diameter. The "outer diameter" is a diameter of each of the bottom parts. The "height" is a distance from one of the bottom parts to another of the bottom parts.

A charge and discharge principle of the secondary battery is not particularly limited. The following description deals with a secondary battery that obtains a battery capacity by using insertion and extraction of an electrode reactant. The secondary battery includes a positive electrode, a negative electrode, and an electrolytic solution. In the secondary battery, a charge capacity of the negative electrode is set to be greater than a discharge capacity of the positive electrode in order to prevent unintentional precipitation of the electrode reactant on a surface of the negative electrode during charging. In other words, an electrochemical capacity per unit area of the negative electrode is set to be greater than an electrochemical capacity per unit area of the positive electrode.

Although not particularly limited in kind, the electrode reactant is specifically a light metal such as an alkali metal or an alkaline earth metal. Examples of the alkali metal include lithium, sodium, and potassium. Examples of the alkaline earth metal include beryllium, magnesium, and calcium.

Examples are given below of a case where the electrode reactant is lithium. A secondary battery that obtains a battery capacity by using insertion and extraction of lithium is a so-called lithium-ion secondary battery. In the lithium-ion secondary battery, lithium is inserted and extracted in an ionic state.

### <1-1. Configuration>

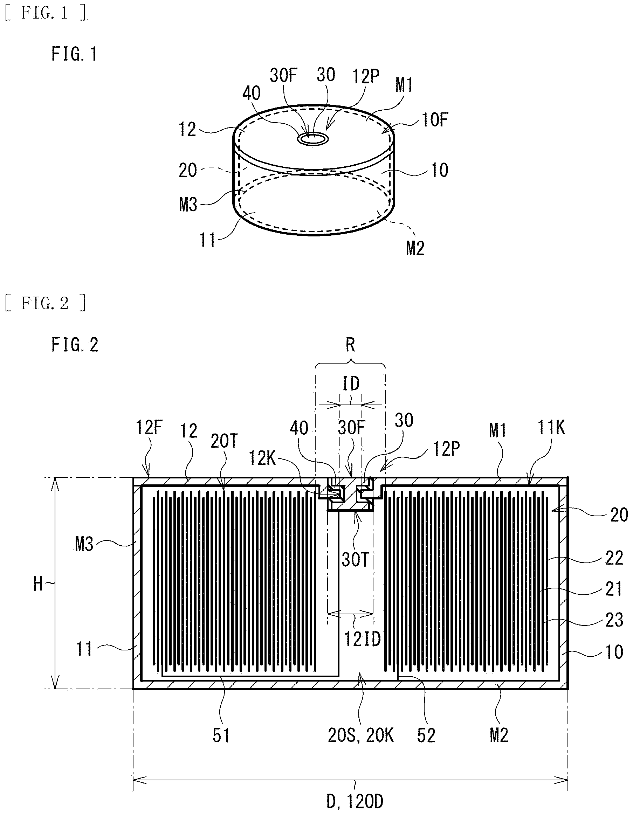

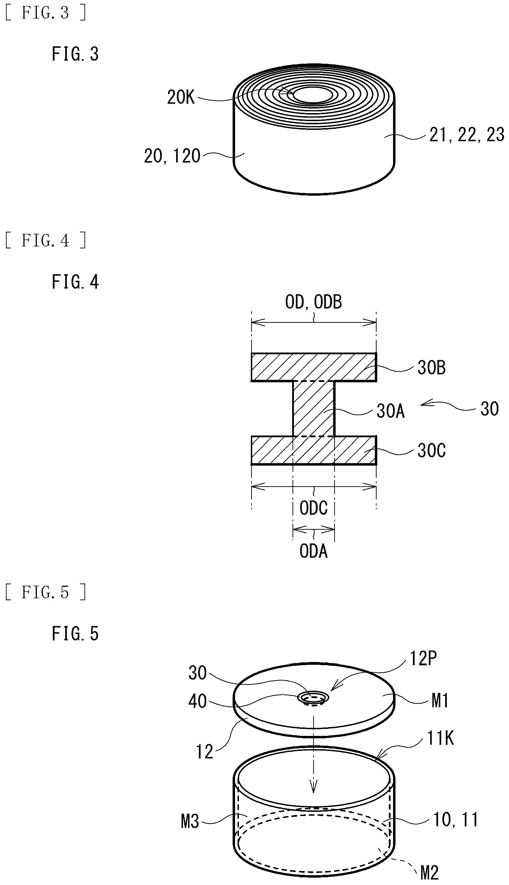

FIG. 1 illustrates a perspective configuration of the secondary battery. FIG. 2 illustrates, in an enlarged manner, a sectional configuration of the secondary battery illustrated in FIG. 1. FIG. 3 illustrates a perspective configuration of a battery device 20 illustrated in FIG. 1. FIG. 4 illustrates, in an enlarged manner, a sectional configuration of an electrode terminal 30 illustrated in FIG. 2. Note that a positive electrode 21, a negative electrode 22, a separator 23, a positive electrode lead 51, and a negative electrode lead 52 to be described later are each illustrated in a linear shape in FIG. 2 for simplifying the illustration.

For convenience, the following description is given with an up direction in FIG. 2 as an upper side of the secondary battery, and a down direction in FIG. 2 as a lower side of the secondary battery.

The secondary battery is a button-type secondary battery, thus having such a three-dimensional shape that a height H is smaller than an outer diameter D, as illustrated in FIGs. 1 and 2. In other words, the secondary battery has a flat and columnar three-dimensional shape. Here, the three-dimensional shape of the secondary battery is flat and cylindrical (circular columnar). Dimensions of the secondary battery are not particularly limited; however, for example, the outer diameter D is within a range from 3 mm to 30 mm both inclusive, and the height H is within a range from 0.5 mm to 70 mm both inclusive. Further, a ratio of the outer diameter D to the height H, i.e., D/H, is greater than 1, and preferably smaller than or equal to 25. Note that in a case where a ring-shaped insulating tape (not illustrated) is provided on a top surface (a top surface 12F described later) of the secondary battery, the height H includes a thickness of the insulating tape. The ring-shaped insulating tape is provided in a region of the top surface of the secondary battery excluding a recessed part 12P described later.

Specifically, the secondary battery includes a battery can 10, the battery device 20, the electrode terminal 30, a gasket 40, the positive electrode lead 51, and the negative electrode lead 52.

### [Battery Can]

As illustrated in FIGs. 1 and 2, the battery can 10 is a hollow housing member that contains the battery device 20.

Here, the battery can 10 has a flat and cylindrical three-dimensional shape in conformity with the three-dimensional shape of the secondary battery which is flat and cylindrical. Accordingly, the battery can 10 includes two bottom parts M1 and M2 opposed to each other, and a sidewall part M3 lying between the bottom parts M1 and M2. The sidewall part M3 is coupled to the bottom part M1 at a top end, and is coupled to the bottom part M2 at a bottom end. Because the battery can 10 is cylindrical as described above, the bottom parts M1 and M2 are each circular in plan shape, and a surface of the sidewall part M3 is a convex curved surface.

The battery can 10 includes a container part 11 and a cover part 12. The cover part 12 is welded to the container part 11. The container part 11 is thus sealed by the cover part 12.

The container part 11 is a container member containing the battery device 20 inside and having a flat and cylindrical shape with a top end open and a bottom end closed. In a state before being sealed by the cover part 12, the container part 11 has an opening 11K (see FIG. 5) through which the battery device 20 is to be placed into the container part 11, as will be described later.

The cover part 12 is a cover member sealing the container part 11 and having a generally circular plate shape, and is welded to the container part 11. Here, the cover part 12 is welded to the container part 11 on a side of the cover part 12 facing a non-device space 20S of the battery device 20 described later. The opening 11K provided in the container part 11 is thus covered by the cover part 12.

In particular, as illustrated in FIG. 2, the cover part 12 bends to protrude in part toward the inside of the container part 11, thus being recessed in part. In other words, a portion of the cover part 12 bends to form a level difference toward a center of the cover part 12. The cover part 12 thus includes the recessed part 12P, and the top surface 12F around the recessed part 12P. The top surface 12F is a first outer end face. As described above, the recessed part 12P is formed by the cover part 12 bending to protrude in part toward the inside of the container part 11. The top surface 12F is an outer end face (a surface) of the cover part 12 around the recessed part 12P.

Here, the cover part 12 bends twice to form the recessed part 12P. One level difference is thereby formed in the cover part 12. The cover part 12 thus includes the recessed part 12P that is one-level recessed.

Note that the shape of the recessed part 12P, that is, a shape defined by an outer edge of the recessed part 12P where the secondary battery is viewed from above, is not particularly limited. Here, the recessed part 12P has a circular shape. An inner diameter and a thickness of the recessed part 12P are not particularly limited, and may be freely chosen.

Further, the cover part 12 has a through hole 12K in the recessed part 12P, more specifically, in a surface of the cover part 12 inside the recessed part 12P, i.e., in a bottom surface of the recessed part 12P. The through hole 12K is positioned to face the non-device space 20S. The wording "positioned to face the non-device space 20S" means that the through hole 12K is positioned to overlap the non-device space 20S. The through hole 12K is used to attach the electrode terminal 30 to the cover part 12, and has an inner diameter ID.

There is no particular limitation on a relationship between an outer diameter 12OD of the cover part 12 and an inner diameter 12ID of the recessed part 12P. The "outer diameter 12OD of the cover part 12" is a so-called maximum outer diameter, and the "inner diameter 12ID of the recessed part 12P" is a so-called maximum inner diameter. A ratio of the inner diameter 12ID to the outer diameter 12OD is preferably within a range from 15% to 90% both inclusive, in particular. A reason for this is that such a range optimizes the inner diameter 12ID with respect to the outer diameter 12OD, and thus allows the cover part 12 to be more resistant to deformation under an external force, consequently making it easier for the cover part 12 to be welded to the container part 11. The ratio is calculated as follows: ratio (%) = (inner diameter 12ID/outer diameter 12OD) × 100, and the value of the ratio is rounded off to one decimal place.

The cover part 12 is welded to the container part 11 as described above; thus, the battery can 10 is a welded can in which two members (the container part 11 and the cover part 12) are welded to each other. As a result, once the cover part 12 has been welded to the container part 11, the battery can 10 is a single member as a whole, that is, a member which is not separable into the two members (the container part 11 and the cover part 12) afterward.

The battery can 10 as a welded can does not include any portion folded over another portion, and does not include any portion in which two or more members lie over each other.

The wording "does not include any portion folded over another portion" means that the battery can 10 is not so processed as to include a portion folded over another portion. The wording "does not include any portion in which two or more members lie over each other" means that the battery can 10 after completion of the secondary battery is physically a single member and is thus not separable into two or more members afterward. In other words, the battery can 10 is not in a state in which two or more members are so assembled to each other as to be separable into the two or more members afterward.

The battery can 10 as a welded can is a so-called crimpless can, being different from a crimped can formed by means of a crimping process. A reason for employing the crimpless can is that this increases a device space volume inside the battery can 10, and accordingly, increases an energy density per unit volume of the secondary battery. The "device space volume" refers to a volume (an effective volume) of an internal space of the battery can 10 available for containing the battery device 20 therein.

Here, the battery can 10 including the container part 11 and the cover part 12 is electrically conductive. The battery can 10 is coupled to the negative electrode 22, which will be described later, of the battery device 20. Thus, the battery can 10 serves as a negative electrode terminal. A reason for employing such a configuration is that this makes it unnecessary to provide a negative electrode terminal separate from the battery can 10, thus preventing the device space volume from decreasing due to the presence of the negative electrode terminal. This results in an increase in device space volume, and accordingly an increase in energy density per unit volume of the secondary battery.

Specifically, the battery can 10 including the container part 11 and the cover part 12 includes one or more of electrically conductive materials including, without limitation, a metal material and an alloy material. To serve as the negative electrode terminal, the battery can 10 here includes one or more of materials including, without limitation, iron, copper, nickel, stainless steel, an iron alloy, a copper alloy, and a nickel alloy. Although not limited to a particular kind, stainless steel may specifically be of SUS304 or SUS316, for example. Note that the container part 11 and the cover part 12 may include the same material, or may include respective different materials from each other.

Note that as will be described later, the battery can 10 (the cover part 12) is insulated from the electrode terminal 30, which serves as a positive electrode terminal, via the gasket 40. A reason for this is that a contact or a short circuit between the battery can 10 (the negative electrode terminal) and the electrode terminal 30 (the positive electrode terminal) is thereby prevented.

### [Battery Device]

The battery device 20 is a device causing charging and discharging reactions to proceed, and includes, as illustrated in FIGs. 1 to 3, the positive electrode 21, the negative electrode 22, the separator 23, and an electrolytic solution which is a liquid electrolyte. Note that FIGs. 2 and 3 each omit the illustration of the electrolytic solution.

Here, the battery device 20 has a three-dimensional shape similar to that of the battery can 10. A reason for this is that this helps to prevent a so-called dead space (a gap between the battery can 10 and the battery device 20) from resulting upon placing the battery device 20 in the battery can 10, and to thereby allow the internal space of the battery can 10 to be efficiently used, as compared with a case where the battery device 20 has a three-dimensional shape different from that of the battery can 10. As a result, the device space volume increases and accordingly, the energy density per unit volume of the secondary battery increases.

Specifically, the battery device 20 has a flat and cylindrical three-dimensional shape in conformity with the three-dimensional shape of the battery can 10 which is flat and cylindrical.

Further, the battery device 20 has a top end 20T. The top end 20T is an end of the battery device 20 located closer to the cover part 12 than to the container part 11, and more specifically, an upper-side end of the battery device 20.

Here, the positive electrode 21 and the negative electrode 22 are wound while being opposed to each other. More specifically, the positive electrode 21 and the negative electrode 22 are stacked on each other with the separator 23 interposed therebetween, and are wound in the state of being stacked with the separator 23 interposed therebetween. Thus, the battery device 20 is a wound electrode body including the positive electrode 21 and the negative electrode 22 that are wound with the separator 23 interposed therebetween. The respective numbers of winds of the positive electrode 21, the negative electrode 22, and the separator 23 are not particularly limited, and may be freely chosen.

In particular, the battery device 20 has the non-device space 20S inside. The non-device space 20S is a space communicating with the outside of the battery device 20. The non-device space 20S is a space in which none of components of the battery device 20 including the positive electrode 21 and the negative electrode 22 are present, and is thus an excess space that does not contribute to charging and discharging reactions.

Here, the positive electrode 21 and the negative electrode 22 are wound as described above, and as a result, a winding center space 20K is present at a winding core part of the positive electrode 21 and the negative electrode 22. Accordingly, in a case where the battery device 20 is the wound electrode body, the non-device space 20S includes the winding center space 20K. The non-device space 20S, i.e., the winding center space 20K, extends in a direction intersecting a direction in which the positive electrode 21 and the negative electrode 22 are wound, that is, extends in a vertical direction in FIG. 2, and penetrates the battery device 20 in that direction.

Note that the positive electrode 21 has a height smaller than that of the separator 23. A reason for this is that this prevents a short circuit between the battery can 10 serving as the negative electrode terminal and the positive electrode 21. Although not particularly limited, a height of the negative electrode 22 is preferably greater than the height of the positive electrode 21. A reason for this is that such a configuration prevents a short circuit between the positive electrode 21 and the negative electrode 22 caused by precipitation of lithium upon charging and discharging. A relationship between the height of the negative electrode 22 and the height of the separator 23 is not particularly limited, and may thus be freely defined. The "height" described here is a dimension in the vertical direction in FIG. 2.

The positive electrode 21 includes a positive electrode current collector and a positive electrode active material layer, which are not illustrated. The positive electrode active material layer may be provided on each of both sides of the positive electrode current collector or may be provided only on one side of the positive electrode current collector. Here, the positive electrode current collector includes a material similar to a material included in the electrode terminal 30 described later. Note that the material included in the positive electrode current collector and the material included in the electrode terminal 30 may be the same as each other or different from each other. The positive electrode active material layer includes a positive electrode active material into which lithium is insertable and from which lithium is extractable. The positive electrode active material includes one or more of lithium-containing compounds including, without limitation, a lithium-containing transition metal compound. Examples of the lithium-containing transition metal compound include an oxide, a phosphoric acid compound, a silicic acid compound, and a boric acid compound each including lithium and one or more transition metal elements as constituent elements. Note that the positive electrode active material layer may further include, for example, a positive electrode binder and a positive electrode conductor.

The negative electrode 22 includes a negative electrode current collector and a negative electrode active material layer, which are not illustrated. The negative electrode active material layer may be provided on each of both sides of the negative electrode current collector or may be provided only on one side of the negative electrode current collector. Here, the negative electrode current collector includes a material similar to the material included in the battery can 10 described above. Note that the material included in the negative electrode current collector and the material included in the battery can 10 may be the same as each other or different from each other. The negative electrode active material layer includes a negative electrode active material into which lithium is insertable and from which lithium is extractable. The negative electrode active material includes one or more of materials including, without limitation, a carbon material and a metal-based material. Examples of the carbon material include graphite. The metal-based material is a material that includes, as a constituent element or constituent elements, one or more elements among metal elements and metalloid elements that are each able to form an alloy with lithium. Specifically, the metal-based material includes one or more of elements including, without limitation, silicon and tin, as a constituent element or constituent elements. The metal-based material may be a simple substance, an alloy, a compound, a mixture of two or more thereof, or a material including two or more phases thereof. Note that the negative electrode active material layer may further include, for example, a negative electrode binder and a negative electrode conductor.

The separator 23 is an insulating porous film interposed between the positive electrode 21 and the negative electrode 22. The separator 23 allows lithium ions to pass therethrough while preventing a short circuit between the positive electrode 21 and the negative electrode 22. This separator 23 includes one or more of polymer compounds including, without limitation, polyethylene.

The positive electrode 21, the negative electrode 22, and the separator 23 are each impregnated with the electrolytic solution. The electrolytic solution includes a solvent and an electrolyte salt. The solvent includes one or more of nonaqueous solvents (organic solvents) including, without limitation, a carbonic-acid-ester-based compound, a carboxylic-acid-ester-based compound, and a lactone-based compound. The electrolyte salt includes one or more of light metal salts including, without limitation, a lithium salt.

Note that FIG. 3 also illustrates a wound body 120 to be used to fabricate the battery device 20 in a process of manufacturing the secondary battery described later. The wound body 120 has a configuration similar to that of the battery device 20 which is the wound electrode body, except that the positive electrode 21, the negative electrode 22, and the separator 23 are each yet to be impregnated with the electrolytic solution.

### [Electrode Terminal]

The electrode terminal 30 is an external coupling terminal to be coupled to an electronic apparatus in a case where the secondary battery is to be mounted on the electronic apparatus. As illustrated in FIGs. 1 and 2, the electrode terminal 30 is provided in the cover part 12. Here, the electrode terminal 30 is coupled to the positive electrode 21 (the positive electrode current collector) of the battery device 20, and thus serves as the positive electrode terminal. Accordingly, upon use of the secondary battery, the secondary battery is coupled to the electronic apparatus via the electrode terminal 30 (the positive electrode terminal) and the battery can 10 (the negative electrode terminal). As a result, the electronic apparatus is able to operate with use of the secondary battery as a power source.

The electrode terminal 30 includes one or more of electrically conductive materials including, without limitation, a metal material and an alloy material. To serve as the positive electrode terminal, the electrode terminal 30 here includes one or more of materials including, without limitation, aluminum, an aluminum alloy, and stainless steel.

Further, the electrode terminal 30 includes a bottom end 30T. The bottom end 30T is an end of the electrode terminal 30 located closer to the container part 11 than to the cover part 12, and more specifically, a lower-side end of the electrode terminal 30.

The electrode terminal 30 is disposed inside the recessed part 12P provided in the cover part 12. The electrode terminal 30 thus includes a top surface 30F serving as a second outer end face exposed from the recessed part 12P. The top surface 30F is an outer end face (a surface) of the cover part 12 exposed from inside the recessed part 12P.

Here, the electrode terminal 30 is configured not to protrude from the cover part 12 when in a state where the electrode terminal 30 lies inside the recessed part 12P. More specifically, in a protruding direction of the cover part 12, that is, in a direction in which the cover part 12 protrudes in part toward the inside of the container part 11 (i.e., the down direction), the top surface 30F of the electrode terminal 30 lies at a position coinciding with a position of the top surface 12F of the cover part 12 or at a position forward of the position of the top surface 12F in the protruding direction, that is, at a position below the top surface 12F. A reason for this is that this increases the device space volume as compared with a case where the electrode terminal 30 protrudes from the cover part 12, given that the height H of the secondary battery is constant.

The recessed part 12P is positioned to face the non-device space 20S (the winding center space 20K), and likewise, the electrode terminal 30 is positioned to face the non-device space 20S. In other words, the electrode terminal 30 is positioned to overlap the non-device space 20S, and is therefore disposed inside a region R overlapping the non-device space 20S.

Here, a portion of the electrode terminal 30 lies inside the battery can 10, and more specifically, lies inside the non-device space 20S. Accordingly, the bottom end 30T of the electrode terminal 30 lies deeper inside the battery can 10 than the top end 20T of the battery device 20, that is, lies below the top end 20T.

Here, the electrode terminal 30 includes terminal parts 30A, 30B, and 30C, as illustrated in FIG. 4.

The terminal part 30A is a first terminal part having a cylindrical shape and extending through the through hole 12K. The terminal part 30A has an outer diameter OD (ODA) smaller than the inner diameter ID of the through hole 12K. The terminal part 30B is a second terminal part having a cylindrical shape and disposed outside the battery can 10, more specifically, inside the recessed part 12P. The terminal part 30B is coupled to a top end of the terminal part 30A and has an outer diameter OD (ODB) greater than the inner diameter ID of the through hole 12K. The terminal part 30C is a third terminal part having a cylindrical shape and disposed inside the battery can 10. The terminal part 30C is coupled to a bottom end of the terminal part 30A and has an outer diameter OD (ODC) greater than the inner diameter ID of the through hole 12K. Note that the outer diameters ODB and ODC may be the same as each other or different from each other. Here, the outer diameters ODB and ODC are the same as each other.

Thus, the electrode terminal 30 has a generally cylindrical three-dimensional shape in which the outer diameter OD is reduced at some midpoint along the electrode terminal 30. A reason for this is that such a shape helps to prevent the terminal part 30B from passing through the through hole 12K because the outer diameter ODB of the terminal part 30B is greater than the inner diameter ID of the through hole 12K, and helps to prevent the terminal part 30C from passing through the through hole 12K because the outer diameter ODC of the terminal part 30C is greater than the inner diameter ID of the through hole 12K. A further reason is that the electrode terminal 30 is fixed to the battery can 10 using a force pressing the terminal part 30B against the battery can 10 and a force pressing the terminal part 30C against the battery can 10 . The electrode terminal 30 is thus prevented from easily falling out of the battery can 10.

### [Gasket]

The gasket 40 is an insulating member disposed between the cover part 12 and the electrode terminal 30, as illustrated in FIGs. 1 and 2, and insulates the electrode terminal 30 from the cover part 12. The electrode terminal 30 is thus fixed to the cover part 12 with the gasket 40 interposed therebetween. The gasket 40 includes one or more of insulating materials including, without limitation, polypropylene and polyethylene.

A range over which the gasket 40 is to be provided is not particularly limited. Here, the gasket 40 is disposed along an entire sidewall of the electrode terminal 30, and is thus provided over a range from the inside of the recessed part 12P to the inside of the battery can 10.

### [Positive Electrode Lead]

As illustrated in FIG. 2, the positive electrode lead 51 is a coupling wiring line coupled to the positive electrode 21 and the electrode terminal 30, and includes a material similar to the material included in the electrode terminal 30. Note that the material included in the positive electrode lead 51 and the material included in the electrode terminal 30 may be the same as each other or different from each other.

Here, to couple the positive electrode 21 and the electrode terminal 30 to each other, the positive electrode lead 51 is disposed inside the non-device space 20S. Thus, the positive electrode lead 51 is coupled to the positive electrode 21 (the positive electrode current collector) at one end, and is coupled to the electrode terminal 30 at another end. A reason for this is that this results in hardly any reduction in device space volume attributable to the presence of the positive electrode lead 51, and consequently leads to an increase in device space volume.

Further, in the positive electrode 21, the positive electrode active material layer is not provided on the positive electrode current collector at each of an end part on an inner side of winding and an end part on an outer side of the winding, and as a result, the positive electrode current collector is exposed at each of such end parts of the positive electrode 21. The positive electrode 21 thus has a foil-winding structure in which only the positive electrode current collector is wound at each of the end part on the inner side of the winding and the end part on the outer side of the winding. A position of coupling of the positive electrode lead 51 to the positive electrode 21 is not particularly limited. However, specifically, the positive electrode lead 51 is coupled to the end part of the positive electrode 21 on the outer side of the winding, that is, to the positive electrode current collector.

### [Negative Electrode Lead]

As illustrated in FIG. 2, the negative electrode lead 52 is coupled to the negative electrode 22 and the battery can 10 (the container part 11), and includes a material similar to the material included in the battery can 10. Note that the material included in the negative electrode lead 52 and the material included in the battery can 10 may be the same as each other or different from each other.

Here, in the negative electrode 22, the negative electrode active material layer is not provided on the negative electrode current collector at each of an end part on the inner side of the winding and an end part on the outer side of the winding, and as a result, the negative electrode current collector is exposed at each of such end parts of the negative electrode 22. The negative electrode 22 thus has a foil-winding structure in which only the negative electrode current collector is wound at each of the end part on the inner side of the winding and the end part on the outer side of the winding. A position of coupling of the negative electrode lead 52 to the negative electrode 22 is not particularly limited. However, specifically, the negative electrode lead 52 is coupled to the end part of the negative electrode 22 on the inner side of the winding, that is, to the negative electrode current collector.

### [Others]

Note that the secondary battery may further include one or more of other unillustrated components.

Specifically, the secondary battery includes a safety valve mechanism. The safety valve mechanism cuts off the electrical coupling between the battery can 10 and the battery device 20 if an internal pressure of the battery can 10 reaches a certain level or higher due to, for example, an internal short circuit or heating from outside. A position where the safety valve mechanism is to be provided is not particularly limited; however, the safety valve mechanism is provided at one of the bottom part M1 or the bottom part M2, preferably the bottom part M2 at which the electrode terminal 30 is not provided.

Further, the secondary battery includes an insulator between the battery can 10 and the battery device 20. The insulator includes one or more of materials including, without limitation, an insulating film and an insulating sheet, and prevents a short circuit between the battery can 10 and the battery device 20 (the positive electrode 21). A range over which the insulator is to be provided is not particularly limited, and may be freely chosen.

Note that the battery can 10 is provided with a liquid injection hole and a cleavage valve. The liquid injection hole is used for injecting the electrolytic solution into the battery can 10, and is sealed after use. In a case where the internal pressure of the battery can 10 reaches a certain level or higher due to, for example, an internal short circuit or heating from outside as described above, the cleavage valve cleaves to release the internal pressure. There is no limitation on respective positions where the liquid injection hole and the cleavage valve are to be provided; however, the liquid injection hole and the cleavage valve are each provided at one of the bottom part M1 or the bottom part M2, preferably the bottom part M2 at which the electrode terminal 30 is not provided, as with the position where the foregoing safety valve mechanism is to be provided.

### <1-2. Operation>

Upon charging of the secondary battery, in the battery device 20, lithium is extracted from the positive electrode 21, and the extracted lithium is inserted into the negative electrode 22 via the electrolytic solution. Upon discharging of the secondary battery, in the battery device 20, lithium is extracted from the negative electrode 22, and the extracted lithium is inserted into the positive electrode 21 via the electrolytic solution. Upon the charging and discharging, lithium is inserted and extracted in an ionic state.

### <1-3. Manufacturing Method>

FIG. 5 illustrates a perspective configuration of the battery can 10 to be used in the process of manufacturing the secondary battery, and corresponds to FIG. 1. Note that FIG. 5 illustrates a state where the cover part 12 is yet to be welded to the container part 11 and thus the container part 11 and the cover part 12 are separate from each other. In the following, FIGs. 1 to 4 described already will be referred to when necessary.

Here, the wound body 120 described above is used to fabricate the battery device 20. Further, the container part 11 and the cover part 12 separate from each other are used to assemble the battery can 10. The container part 11 is a member in which the bottom part M2 and the sidewall part M3 are integrated with each other, and has the opening 11K, as described above. The electrode terminal 30 is attached to the cover part 12 in advance, with the gasket 40 interposed therebetween. Note that the bottom part M2 and the sidewall part M3 may be separate from each other, and the container part 11 may thus be prepared by welding the sidewall part M3 to the bottom part M2.

In a case of manufacturing the secondary battery, prepared first is a slurry in which the positive electrode active material, etc. are dispersed or dissolved in a solvent such as an organic solvent, following which the slurry is applied on the positive electrode current collector to thereby form the positive electrode active material layer. The positive electrode 21 including the positive electrode current collector and the positive electrode active material layer is thereby fabricated.

Thereafter, a slurry is prepared by a similar procedure except for using the negative electrode active material, etc. instead of the positive electrode active material, etc., following which the slurry is applied on the negative electrode current collector to thereby form the negative electrode active material layer. The negative electrode 22 including the negative electrode current collector and the negative electrode active material layer is thereby fabricated.

Thereafter, the electrolyte salt is added to the solvent. The electrolyte salt is thereby dispersed or dissolved in the solvent. The electrolytic solution is thus prepared.

Thereafter, the positive electrode 21 and the negative electrode 22 are stacked on each other with the separator 23 interposed therebetween, following which the stack of the positive electrode 21, the negative electrode 22, and the separator 23 is wound to thereby fabricate the wound body 120 having the winding center space 20K.

Thereafter, the wound body 120 is placed into the container part 11 through the opening 11K. In this case, by means of a method such as a welding method, one end of the negative electrode lead 52 is coupled to the wound body 120 (the negative electrode current collector of the negative electrode 22) and another end of the negative electrode lead 52 is coupled to the container part 11. Note that the welding method includes one or more of methods including, without limitation, a laser welding method and a resistance welding method. Details of the welding method described here apply also to the following.

Thereafter, the cover part 12 to which the electrode terminal 30 has been attached in advance with the gasket 40 interposed therebetween is so placed on the container part 11 as to cover the opening 11K, following which the cover part 12 is welded to the container part 11. In this case, a peripheral portion of the cover part 12 is welded to one end of the container part 11 around the opening 11K. Further, by means of a method such as a welding method, one end of the positive electrode lead 51 is coupled to the wound body 120 (the positive electrode current collector of the positive electrode 21), and the other end of the positive electrode lead 51 is coupled to the electrode terminal 30. The container part 11 and the cover part 12 are thereby joined to each other. The battery can 10 is thus assembled using the container part 11 and the cover part 12, and the wound body 120 is sealed inside the battery can 10.

Lastly, the electrolytic solution is injected into the battery can 10 through the unillustrated liquid injection hole, following which the liquid injection hole is sealed. In this case, the winding center space 20K, i.e., the non-device space 20S, is used to retain the electrolytic solution, allowing for injection of a necessary and sufficient amount of the electrolytic solution into the battery can 10. This causes the wound body 120 (the positive electrode 21, the negative electrode 22, and the separator 23) to be impregnated with the electrolytic solution, thereby fabricating the battery device 20 which is the wound electrode body having the non-device space 20S (the winding center space 20K). The battery device 20 is thus sealed inside the battery can 10. As a result, the secondary battery is completed.

### <1-4. Action and Effects>

According to the secondary battery, the battery device 20 is contained inside the container part 11 and the cover part 12 is welded to the container part 11. Further, the cover part 12 bends to protrude in part toward the inside of the container part 11 to thereby form the recessed part 12P, and the electrode terminal 30 is disposed inside the recessed part 12P. As a result, for a reason described below, it is possible to achieve both an increased energy density and improved manufacturing stability.

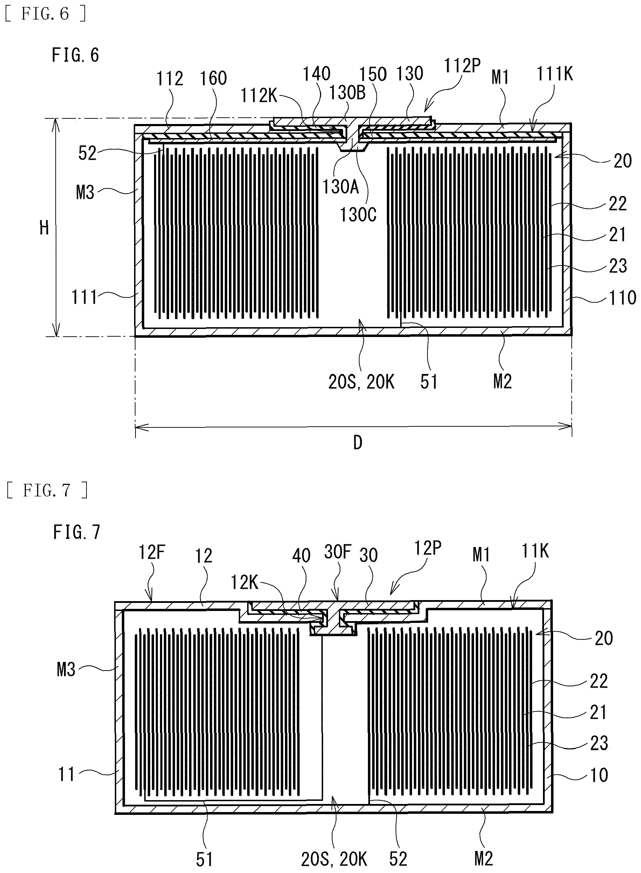

FIG. 6 illustrates a sectional configuration of a secondary battery of a comparative example, and corresponds to FIG. 2. The secondary battery of the comparative example has a configuration corresponding to that of the secondary battery disclosed in PTL 1 (Japanese Unexamined Patent Application Publication No. 2014-096374) described above. Specifically, as illustrated in FIG. 6, the secondary battery of the comparative example includes a battery can 110 (a container part 111 and a cover part 112), an electrode terminal 130, and a gasket 140, instead of the battery can 10 (the container part 11 and the cover part 12), the electrode terminal 30, and the gasket 40, and further includes an insulator 150 and a current collector 160.

Note that a maximum thickness (wall thickness) of the battery can 110 (the container part 111 and the cover part 112) is the same as a maximum thickness of the battery can 10 (the container part 11 and the cover part 12), and therefore the respective thicknesses of the battery cans 10 and 110 are constant. Further, dimensions (the outer diameter D and the height H) of the secondary battery of the comparative example are the same as the dimensions (the outer diameter D and the height H) of the secondary battery of the present embodiment, and therefore the outer diameter D and the height H are constant.

The battery can 110 includes the container part 111 and the cover part 112. The container part 111 has an opening 111K. The cover part 112 has a through hole 112K and a recessed part 112P. The container part 111 has a configuration similar to that of the container part 11 except that the container part 111 includes a material similar to the material included in the electrode terminal 30 in order to serve as a positive electrode terminal. The cover part 112 has a configuration similar to that of the cover part 12 except that the cover part 112 includes a material similar to the material included in the battery can 10 in order to serve as a negative electrode terminal, and that the cover part 112 is reduced in thickness in part to thereby form the recessed part 112P. In the cover part 112, the recessed part 112P is thus formed by the cover part 112 being reduced in thickness in part, not by the cover part 112 bending to protrude in part.

The electrode terminal 130 is disposed inside the recessed part 112P with the gasket 140 interposed therebetween. The electrode terminal 130 includes terminal parts 130A, 130B, and 130C corresponding to the terminal parts 30A, 30B, and 30C. The terminal part 130A extends through the through hole 112K. The terminal part 130B is so disposed inside the recessed part 112P as to protrude from the cover part 112. The terminal part 130C is disposed inside the battery can 110 (the container part 111). Note that the terminal part 130B has an outer diameter greater than that of the terminal part 130C. The current collector 160 is provided on a back surface (a surface facing the container part 111) of the cover part 112 with the insulator 150 interposed therebetween. Thus, the battery can 110 (the container part 111) serving as the positive electrode terminal is coupled to the battery device 20 (the positive electrode 21) via the positive electrode lead 51, and the electrode terminal 130 serving as the negative electrode terminal is coupled to the battery device 20 (the negative electrode 22) via the negative electrode lead 52.

In the secondary battery of the comparative example, as illustrated in FIG. 6, the cover part 112 is reduced in thickness in part to form the recessed part 112P for the electrode terminal 130 to be disposed inside.

As described above, the maximum thickness of the battery can 110 is constant. Therefore, in this case, if the maximum thickness of the battery can 110 is already sufficiently small, it is necessary to greatly decrease the thickness of the cover part 112 in part in order to provide the recessed part 112P in the cover part 112. The portion in which the thickness is reduced, however, deteriorates in physical strength as compared with the portion not reduced in thickness. This makes the cover part 112 easily deformable in response to an external force. As a result, if the cover part 112 is pressed against the container part 111 during welding of the cover part 112 to the container part 111, the cover part 112 easily deforms due to the external force, i.e., the pressing force on the cover part 112, and this makes it difficult for the cover part 112 to be welded to the container part 111.

More specifically, in response to the external force, the cover part 112 easily warps in such a manner that a center portion of the cover part 112 is brought closer to the container part 111 and a peripheral portion of the cover part 112 is brought farther from the container part 111. In this case, a gap easily develops between the container part 111 and the cover part 112, making it difficult for the cover part 112 to be sufficiently welded to the container part 111. As a result, poor welding of the cover part 112 to the container part 111 easily occurs during the process of manufacturing the secondary battery, that is, upon welding the cover part 112 to the container part 111, causing a manufacturing yield to tend to decrease.

Furthermore, in the secondary battery of the comparative example, the insulator 150 and the current collector 160 are interposed between the cover part 112 and the battery device 20.

In this case, because the height H is constant as described above, a volume of the internal space of the battery can 110 available for containing the battery device 20 therein decreases by an amount corresponding to the insulator 150 and the current collector 160 lying inside the battery can 110. Here, in particular, the electrode terminal 130 protruding from the cover part 112 also decreases the volume of the internal space of the battery can 110 available for containing the battery device 20 therein, resulting in a further decrease in volume of the internal space. The device space volume thus greatly decreases, and accordingly, the height of each of the positive electrode 21 and the negative electrode 22 decreases in the battery device 20. An area over which the positive electrode and the negative electrode are opposed to each other thus becomes smaller, which results in a decrease in energy density per unit volume of the secondary battery.

From the foregoing, according to the secondary battery of the comparative example, the manufacturing yield tends to decrease due to the poor welding, and the energy density per unit volume also decreases due to the decrease in device space volume. This makes it difficult to achieve both an increased energy density and improved manufacturing stability.

In contrast, in the secondary battery of the present embodiment, as illustrated in FIG. 2, the cover part 12 is not reduced in thickness in part but bends to protrude in part to form the recessed part 12P for the electrode terminal 30 to be disposed inside.

In this case, the thickness of the cover part 12 is kept at the maximum thickness throughout the entire cover part 12. This allows for retention of physical strength throughout the entire cover part 12, thus allowing the cover part 12 to be resistant to deformation by an external force. Accordingly, even if the cover part 12 is pressed against the container part 11 during welding of the cover part 12 to the container part 11, the cover part 12 is not easily deformed by the external force, that is, the pressing force on the cover part 12, and the cover part 12 is thus easily weldable to the container part 11.

More specifically, because the entire cover part 12 is resistant to warpage by the external force, the development of a gap between the container part 11 and the peripheral portion of the cover part 12 is suppressed and consequently, it is easier for the cover part 12 to be sufficiently welded to the container part 11. In this case, particularly at a location where the cover part 12 bends in part, physical resistance of the cover part 12 to the external force improves to prevent the cover part 12 from undergoing great warpage even upon receiving the external force. Thus, the gap described above hardly develops. This helps to prevent the occurrence of poor welding of the cover part 12 to the container part 11 during the process of manufacturing the secondary battery, that is, upon welding the cover part 12 to the container part 11, and consequently helps to prevent a decrease in manufacturing yield.

Furthermore, in the secondary battery of the present embodiment, neither the insulator 150 nor the current collector 160 is interposed between the cover part 12 and the battery device 20.

In this case, the volume of the internal space of the battery can 10 available for containing the battery device 20 therein increases by an amount saved by the absence of the insulator 150 and the current collector 160 inside the battery can 10. The device space volume thus increases, allowing for an increase in height of each of the positive electrode 21 and the negative electrode 22 in the battery device 20. This increases the area over which the positive electrode and the negative electrode are opposed to each other, and thus increases the energy density per unit volume of the secondary battery.

From the foregoing, according to the secondary battery of the present embodiment, a decrease in manufacturing yield is suppressed and the energy density per unit volume increases. It is thus possible to achieve both an increased energy density and improved manufacturing stability.

In this case, in the battery can 10, in particular, the cover part 12 is welded to the container part 11, and the battery can 10 is thus a welded can, that is, a crimpless can. Accordingly, the device space volume increases as compared with a crimped can. An increased energy density per unit volume is achievable also from this regard. Further, the increase in device space volume results in an increase in the amount of the electrolytic solution that can be accommodated in the battery can 10, that is, an increase in the amount of the electrolytic solution to be held by the battery device 20. Accordingly, it is also possible for charging and discharging reactions to proceed sufficiently and stably.

Although not specifically illustrated here, possible configurations of the secondary battery include a configuration of the secondary battery disclosed in PTL 2 (Japanese Unexamined Patent Application Publication No. 2015-130317), as well as the configuration of the secondary battery (FIG. 6) disclosed in PTL 1 (Japanese Unexamined Patent Application Publication No. 2014-096374).

However, according to the secondary battery having the configuration of PTL 2, the cover part 12 including the recessed part 12P is not welded to the container part 11. Such a secondary battery is therefore originally free from the above-described issue of poor welding resulting from the deformation or warpage of the cover part 12. Accordingly, unlike the secondary battery of the present embodiment, to achieve both an increased energy density and improved manufacturing stability is considered to be unnecessary in the first place.

In the secondary battery of the present embodiment, in particular, the ratio of the inner diameter 12ID of the recessed part 12P to the outer diameter 12OD of the cover part 12 may be within the range from 15% to 90% both inclusive. In such a case, the cover part 12 becomes more resistant to deformation by the external force. Accordingly, it is further easier for the cover part 12 to be welded to the container part 11, and it is thus possible to achieve higher effects.

Further, in the protruding direction of the cover part, the top surface 30F of the electrode terminal 30 may lie at a position coinciding with the position of the top surface 12F of the cover part 12 or at a position forward of the position of the top surface 12F in the protruding direction. In such a case, the device space volume increases as compared with the case where the electrode terminal 30 protrudes from the cover part 12. Accordingly, it is possible to achieve higher effects.

Further, the battery device 20 may have the non-device space 20S inside, and the cover part 12 may be welded to the container part 11 on the side of the cover part 12 facing the non-device space 20S. In such a case, the energy density per unit volume further increases, and it is thus possible to achieve higher effects.

More specifically, in the secondary battery having the configuration of PTL 2 described above, the recessed part 12P is not disposed to face the non-device space 20S, and it is thus necessary to provide a space (a loss space) other than the non-device space 20S in order to dispose the electrode terminal 30 therein. Accordingly, the device space volume decreases due to the presence of the loss space, resulting in a decrease in energy density per unit volume. In contrast, in the secondary battery of the present embodiment, the recessed part 12P is disposed to face the non-device space 20S, and this makes it unnecessary to provide the above-described loss space. The device space volume thus increases further, resulting in a further increase in energy density per unit volume.

Further, the positive electrode 21 and the negative electrode 22 may be wound while being opposed to each other, and the non-device space 20S may thus be present at the winding core part of the positive electrode 21 and the negative electrode 22. In such a case, the non-device space 20S includes the winding center space 20K. This makes it unnecessary for the battery device 20 to be separately provided with the non-device space 20S because the winding center space 20K which is inherently included in the battery device 20, i.e., the wound electrode body, is used as the non-device space 20S. The battery device 20 having the non-device space 20S is thus provided easily and stably, without a decrease in device space volume that would result from separately providing the non-device space 20S. Accordingly, it is possible to achieve higher effects.

Further, the positive electrode lead 51 coupled to the positive electrode 21 and to the electrode terminal 30 may be disposed inside the non-device space 20S. In such a case, no decrease in device space volume results even if the positive electrode lead 51 is used. Accordingly, it is possible to achieve higher effects. In this case, in particular, a space necessary for disposing the positive electrode lead 51 between the battery can 10 and the battery device 20 is minimized, and accordingly, a gap between the battery can 10 and the battery device 20 is minimized. As a result, the device space volume hardly decreases. Accordingly, it is possible to achieve higher effects also from this regard.

Further, the electrode terminal 30 may include the terminal part 30A having a small outer diameter (ODA) and the terminal parts 30B and 30C having large outer diameters (ODB and ODC). In such a case, the electrode terminal 30 is prevented from falling out of the battery can 10 easily. Accordingly, stable charging and discharging operations of the secondary battery are secured while the device space volume is secured. It is thus possible to achieve higher effects.

Further, the electrode terminal 30 may be coupled to the positive electrode 21, and the battery can 10 (the container part 11) may be coupled to the negative electrode 22. In such a case, the battery can 10 serves as the negative electrode terminal, and it is thus unnecessary for the secondary battery to separately include a negative electrode terminal. Accordingly, there is no decrease in device space volume attributable to the presence of a negative electrode terminal, and it is thus possible to achieve higher effects. In this case, the gasket 40 may be disposed between the battery can 10 (the cover part 12) and the electrode terminal 30. This prevents a short circuit between the electrode terminal 30 and the battery can 10 also in the case where the battery can 10 serves as the negative electrode terminal. Accordingly, stable charging and discharging operations of the secondary battery are secured even if the battery can 10 is used as the negative electrode terminal. It is thus possible to achieve higher effects.

Further, the secondary battery may have a flat and columnar shape, in other words, the secondary battery may be a small-sized secondary battery such as a button-type secondary battery. Even in such a small-sized secondary battery which is highly constrained in terms of size, a sufficient increase in energy density per unit volume is achieved. It is thus possible to achieve higher effects.

### <2. Modifications>

Next, modifications of the secondary battery will be described. The configuration of the secondary battery described above is appropriately modifiable, as will be described below. Note that any two or more of the following series of modifications may be combined.

### [Modification 1]

In FIG. 2, the positive electrode 21 and the electrode terminal 30 are coupled to each other via the single positive electrode lead 51. However, although not illustrated here, the number of the positive electrode leads 51 is not particularly limited and may be two or more. Thus, the positive electrode 21 and the electrode terminal 30 may be coupled to each other via the two or more positive electrode leads 51.

In such a case also, an increased energy density and improved manufacturing stability are both achieved. Accordingly, it is possible to achieve similar effects. In this case, in particular, as the number of the positive electrode leads 51 increases, the secondary battery (the battery device 20) decreases in electrical resistance. It is thus possible to achieve higher effects. Note that even if the number of the positive electrode leads 51 is increased, the presence of the positive electrode leads 51 results in hardly any decrease in device space volume as long as the positive electrode leads 51 are disposed in the non-device space 20S.

### [Modification 2]

In FIG. 4, the outer diameter ODB of the terminal part 30B and the outer diameter ODC of the terminal part 30C are equal to each other in the electrode terminal 30. However, relative magnitudes of the outer diameters ODB and ODC are not particularly limited, and are thus freely changeable.

Specifically, referring to FIG. 4, the outer diameter ODB of the terminal part 30B may be made greater than the outer diameter ODC of the terminal part 30C by extending a range of formation of the recessed part 12P, as illustrated in FIG. 7 corresponding to FIG. 2. In such a case also, an increased energy density and improved manufacturing stability are both achieved. Accordingly, it is possible to achieve similar effects.

In this case, in particular, an exposure area of the electrode terminal 30 (the terminal part 30B) increases, which allows for easy coupling of the secondary battery to an electronic apparatus. Needless to say, increasing only the outer diameter ODB of the terminal part 30B while keeping the outer diameter ODC of the terminal part 30C results in hardly any decrease in device space volume.

Note that although not specifically illustrated here, the outer diameter ODB of the terminal part 30B may be smaller than the outer diameter ODC of the terminal part 30C. It is possible to achieve similar effects also in such a case.

### [Modification 3]

In FIG. 4, the electrode terminal 30 includes the terminal parts 30A, 30B, and 30C, and the outer diameter OD of the electrode terminal 30 changes at some midpoint along the electrode terminal 30. However, the three-dimensional shape of the electrode terminal 30 is not particularly limited, and is thus freely changeable.

Specifically, although not illustrated here, the electrode terminal 30 may include only the terminal parts 30A and 30B without the terminal part 30C, or may include only the terminal parts 30A and 30C without the terminal part 30B. Alternatively, the electrode terminal 30 may have a substantially uniform outer diameter OD as a whole, and therefore the outer diameter OD of the electrode terminal 30 may be substantially constant. In such a case also, an increased energy density and improved manufacturing stability are both achieved. Accordingly, it is possible to achieve similar effects.

### [Modification 4]

In FIGs. 2 and 4, the terminal parts 30A, 30B, and 30C each have a cylindrical three-dimensional shape, and therefore the electrode terminal 30 has a generally cylindrical three-dimensional shape as a whole. However, the three-dimensional shape of each of the terminal parts 30A, 30B, and 30C is not particularly limited as long as the electrode terminal 30 is able to serve as the positive electrode terminal.

Specifically, the terminal parts 30A, 30B, and 30C may each have another three-dimensional shape such as a polygonal prism shape, and the electrode terminal 30 may thus have such another, generally polygonal prismatic three-dimensional shape as a whole. The polygonal prism is not particularly limited in kind; however, examples thereof include a triangular prism, a rectangular prism, and a pentagonal prism.

Needless to say, the three-dimensional shape of the terminal part 30A may be the same as or different from the three-dimensional shape of the terminal part 30B. The relationship between the respective three-dimensional shapes of the terminal parts 30A and 30B described here similarly applies to the respective three-dimensional shapes of the terminal parts 30A and 30C, and to the respective three-dimensional shapes of the terminal parts 30B and 30C.

In such cases also, an increased energy density and improved manufacturing stability are both achieved. Accordingly, it is possible to achieve similar effects.

### [Modification 5]

In FIG. 2, the cover part 12 bends twice to form one level difference in the cover part 12, and the cover part 12 thus includes the recessed part 12P that is one-level recessed. However, neither the number of bends of the cover part 12 nor the number of level differences in the recessed part 12P is particularly limited.

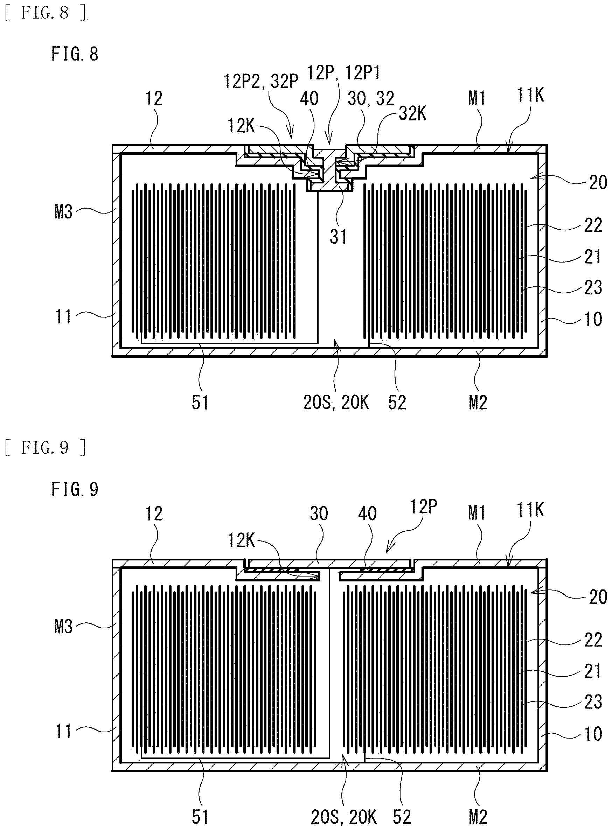

Specifically, as illustrated in FIG. 8 corresponding to FIG. 2, the cover part 12 may bend four times to form two level differences in the cover part 12, and the cover part 12 may thus include the recessed part 12P that is two-level recessed. The recessed part 12P includes a lower-level recessed part 12P1 at a first level having the through hole 12K, and an upper-level recessed part 12P2 at a second level.

Here, due to the recessed part 12P including the lower-level recessed part 12P1 and the upper-level recessed part 12P2 as described above, the electrode terminal 30 includes a lower-level terminal 31 and an upper-level terminal 32.

The lower-level terminal 31 has a configuration similar to that of the electrode terminal 30 illustrated in FIGs. 2 and 4, and thus has a generally cylindrical three-dimensional shape including the terminal parts 30A, 30B, and 30C. The upper-level terminal 32 has a three-dimensional shape like a circular plate, and has an outer diameter greater than a maximum outer diameter of the lower-level terminal 31. The upper-level terminal 32 bends twice toward the lower-level terminal 31 at a location corresponding to the lower-level recessed part 12P1, thus being recessed in part. The upper-level terminal 32 thus has a level difference. Accordingly, the upper-level terminal 32 includes a recessed part 32P, and has a through hole 32K in the recessed part 32P.

The upper-level terminal 32 is disposed inside the recessed part 12P (the lower-level recessed part 12P1 and the upper-level recessed part 12P2) in a manner in which the through hole 32K overlaps the through hole 12K, with the gasket 40 interposed between the upper-level terminal 32 and the recessed part 12P. The lower-level terminal 31 is disposed inside the recessed part 12P (the lower-level recessed part 12P1 and the upper-level recessed part 12P2) in a manner in which the terminal part 30A extends through the through holes 12K and 32K. The lower-level terminal 31 is thus coupled to the upper-level terminal 32. In the lower-level terminal 31, the terminal part 30B is disposed inside the recessed part 32P so as not to protrude from the upper-level terminal 32. Here, the terminal part 30B is recessed from the upper-level terminal 32, and the electrode terminal 30 as a whole is thus recessed in part.

A material included in the lower-level terminal 31 and a material included in the upper-level terminal 32 may be the same as each other or different from each other.

In such a case also, an increased energy density and improved manufacturing stability are both achieved. Accordingly, it is possible to achieve similar effects. In this case, in particular, even if the lower-level terminal 31 is used in which the outer diameters ODB and ODC are the same, an increased exposure area of the electrode terminal 30 is achieved with use of the upper-level terminal 32 having an outer diameter greater than the maximum outer diameter of the lower-level terminal 31. This makes it easy to couple the secondary battery to an electronic apparatus, similarly to the case illustrated in FIG. 7.

### [Modification 6]

In FIG. 2, the electrode terminal 30 includes the terminal parts 30A, 30B, and 30C, and has a generally cylindrical three-dimensional shape in which the outer diameter OD changes at some midpoint along the electrode terminal 30. However, the three-dimensional shape of the electrode terminal 30 is not particularly limited as long as the electrode terminal 30 is able to serve as the positive electrode terminal, as described above. The electrode terminal 30 may thus have another three-dimensional shape without the terminal part(s) 30A, 30B, and/or 30C.

Specifically, as illustrated in FIG. 9 corresponding to FIG. 2, the electrode terminal 30 may have a circular plate shape. The circular-plate-shaped electrode terminal 30 is disposed inside the recessed part 12P with the gasket 40 interposed therebetween, and is coupled to the battery device 20 (the positive electrode 21) via the positive electrode lead 51. Here, the electrode terminal 30 has an outer diameter smaller than the inner diameter of the recessed part 12P, and therefore the electrode terminal 30 is separated from the cover part 12 therearound. Accordingly, the gasket 40 is provided only partly in a region between the electrode terminal 30 and the cover part 12, more specifically, only in a region in which the electrode terminal 30 and the cover part 12 could contact each other if not for the gasket 40.

Here, the electrode terminal 30 includes a cladding material including an aluminum layer and a nickel layer disposed in order from a side closer to the gasket 40. In the cladding material, the aluminum layer and the nickel layer are roll-bonded to each other.

In such a case also, an increased energy density and improved manufacturing stability are both achieved. Accordingly, it is possible to achieve similar effects. In this case, in particular, because no portion of the electrode terminal 30 is disposed inside the container part 11, the device space volume increases as compared with the case where a portion of the electrode terminal 30 is disposed inside the container part 11 (FIG. 2). This allows for an increase in the number of winds of the battery device 20, resulting in a further increase in energy density per unit volume.

### [Modification 7]

In FIGs. 2 and 3, the secondary battery includes the battery device 20 which is the wound electrode body, and the positive electrode 21 and the negative electrode 22 are wound with the separator 23 interposed therebetween in the battery device 20.

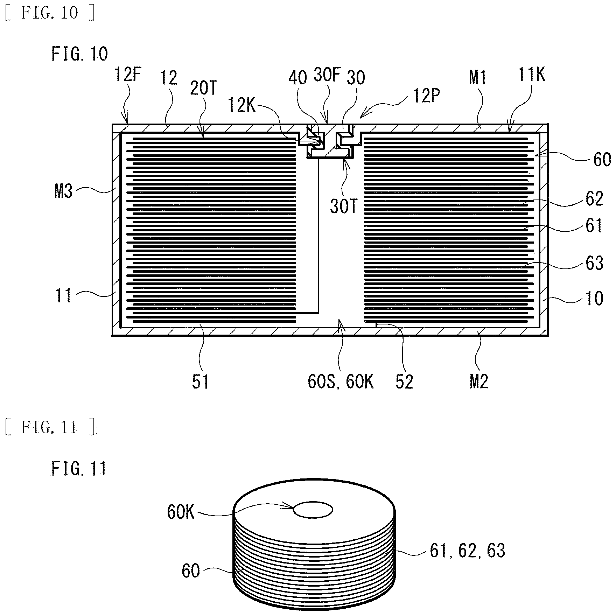

However, as illustrated in FIG. 10 corresponding to FIG. 2 and in FIG. 11 corresponding to FIG. 3, the secondary battery may include a battery device 60 which is a stacked electrode body, instead of the battery device 20 which is the wound electrode body. The battery device 60 includes a positive electrode 61, a negative electrode 62, and a separator 63 which correspond to the positive electrode 21, the negative electrode 22, and the separator 23. In the battery device 60, the positive electrode 61 and the negative electrode 62 are alternately stacked on each other with the separator 63 interposed therebetween.

Here, the battery device 60 is provided with a through hole 60K extending through all of the positive electrode 61, the negative electrode 62, and the separator 63 in a stacking direction. Thus, the through hole 60K constitutes a non-device space 60S of the battery device 60.

The battery device 60 which is a stacked electrode body is fabricated by a procedure similar to the fabrication procedure of the battery device 20 which is the wound electrode body, except that a stacked body is fabricated by stacking together the positive electrode 61, the negative electrode 62, and the separator 63 each having the through hole 60K, following which the stacked body is impregnated with the electrolytic solution to fabricate the battery device 60.

In such a case also, an increased energy density and improved manufacturing stability are both achieved. Accordingly, it is possible to achieve similar effects. In FIGs. 10 and 11, the through hole 60K is used as the non-device space 60S. Note that although not specifically illustrated here, the battery device 60 may be provided with a partial through hole that partially extends through the positive electrode 61, the negative electrode 62, and the separator 63 in the stacking direction, and the partial through hole may be used as the non-device space 60S.

### [Modification 8]

The positive electrode lead 51 may be physically separated from the positive electrode current collector and thereby provided as a component separate from the positive electrode current collector. Alternatively, the positive electrode lead 51 may be physically coupled to the positive electrode current collector and thereby integrated with the positive electrode current collector. In the latter case, a punching process on a metal foil is used in the fabrication process of the positive electrode 21. Specifically, after the positive electrode active material layer is formed on the positive electrode current collector, the positive electrode current collector is punched into a configuration in which the positive electrode lead 51 and the positive electrode current collector are integrated with each other. It is thereby possible to form the positive electrode 21 including the positive electrode current collector integrated with the positive electrode lead 51. In this case, the positive electrode lead 51 constitutes a portion of the positive electrode current collector. In such a case also, an increased energy density and improved manufacturing stability are both achieved. Accordingly, it is possible to achieve similar effects.

Note that in the case where the positive electrode lead 51 is integrated with the positive electrode current collector, it is not necessary that the positive electrode 21 have a foil-winding structure. Thus, the positive electrode active material layer may be provided on the entire positive electrode current collector. In other words, the positive electrode current collector does not have to be exposed at each of the end parts of the positive electrode 21 on the inner side and the outer side of the winding.

Modification 8 described here is applicable also to the negative electrode lead 52 and the negative electrode current collector. Thus, the negative electrode lead 52 may be separate from the negative electrode current collector, or may be integrated with the negative electrode current collector. Needless to say, in a case where the negative electrode lead 52 is integrated with the negative electrode current collector, it is not necessary that the negative electrode 22 have a foil-winding structure, and thus the negative electrode active material layer may be provided on the entire negative electrode current collector.

### [Modification 9]

In FIG. 2, the electrode terminal 30 is coupled to the battery device 20 (the positive electrode 21) via the positive electrode lead 51, and the battery device 20 (the negative electrode 22) is coupled to the battery can 10 via the negative electrode lead 52. Accordingly, the electrode terminal 30 serves as the positive electrode terminal, and the battery can 10 serves as the negative electrode terminal.

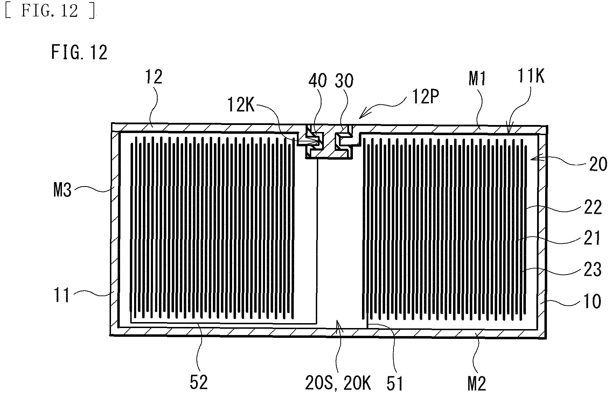

However, as illustrated in FIG. 12 corresponding to FIG. 2, the electrode terminal 30 may be coupled to the battery device 20 (the negative electrode 22) via the negative electrode lead 52, and the battery device 20 (the positive electrode 21) may be coupled to the battery can 10 via the positive electrode lead 51. In this case, the electrode terminal 30 serves as the negative electrode terminal, and the battery can 10 serves as the positive electrode terminal.

To serve as the negative electrode terminal, the electrode terminal 30 includes one or more of materials including, without limitation, iron, copper, nickel, stainless steel, an iron alloy, a copper alloy, and a nickel alloy. To serve as the positive electrode terminal, the battery can 10 includes one or more of materials including, without limitation, aluminum, an aluminum alloy, and stainless steel.

In such a case also, an increased energy density and improved manufacturing stability are both achieved. Accordingly, it is possible to achieve similar effects.

### [Modification 10]

In FIG. 2, the secondary battery has a button-type battery structure. However, as described above, the battery structure of the secondary battery is not particularly limited.

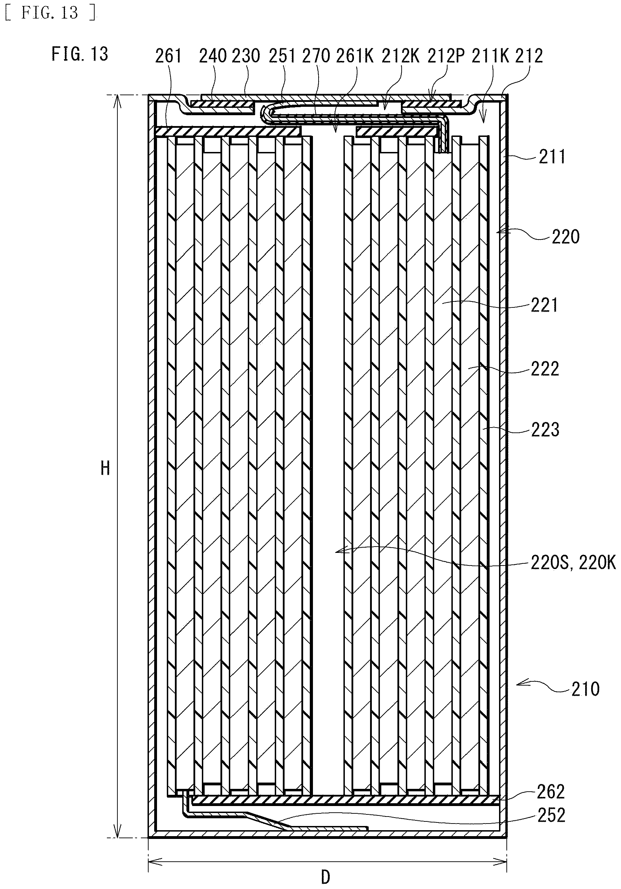

Specifically, as illustrated in FIG. 13 corresponding to FIG. 2, the battery structure of the secondary battery may be a cylindrical type. In this case, the ratio (D/H) of the outer diameter D to the height H is smaller than 1, and the secondary battery thus has a columnar three-dimensional shape. The secondary battery of the cylindrical type has a configuration similar to that of the secondary battery of the button type except for the following.

Specifically, the secondary battery of the cylindrical type includes, as illustrated in FIG. 13, a battery can 210 (a container part 211, an opening 211K, a cover part 212, a through hole 212K, and a recessed part 212P), a battery device 220 (a positive electrode 221, a negative electrode 222, a separator 223, and a non-device space 220S, i.e., a winding center space 220K), an electrode terminal 230, a gasket 240, a positive electrode lead 251, and a negative electrode lead 252 which correspond to the battery can 10 (the container part 11, the opening 11K, the cover part 12, the through hole 12K, and the recessed part 12P), the battery device 20 (the positive electrode 21, the negative electrode 22, the separator 23, and the non-device space 20S, i.e., the winding center space 20K), the electrode terminal 30, the gasket 40, the positive electrode lead 51, and the negative electrode lead 52.

In addition, the secondary battery of the cylindrical type further includes a pair of insulating plates 261 and 262, and a sealant 270.

The battery can 210 (the container part 211 and the cover part 212) has a configuration similar to that of the battery can 10 (the container part 11 and the cover part 12) except that the ratio (D/H) of the outer diameter to the height H is different as described above. Specifically, the cover part 212 is welded to the container part 211 and includes the recessed part 212P. The electrode terminal 230 is thus disposed inside the recessed part 212P with the gasket 240 interposed therebetween. In the battery device 220, the positive electrode 221, the negative electrode 222, and the separator 223 are each impregnated with the electrolytic solution. The configuration of the electrolytic solution is as described above.

The positive electrode lead 251 is coupled to the positive electrode 221 on a side closer to the cover part 212, not a side farther from the cover part 212, and is coupled to the electrode terminal 230 via the through hole 212K provided in the cover part 212. Note that a manner of routing of the positive electrode lead 251 between the positive electrode 221 and the electrode terminal 230 is not particularly limited. Here, the positive electrode lead 251 bends between the positive electrode 221 and the electrode terminal 230, and more specifically, folded once or more at some midpoint between the positive electrode 221 and the electrode terminal 230. FIG. 13 illustrates a case where the positive electrode lead 251 is folded only once.

The insulating plates 261 and 262 are disposed to sandwich the battery device 220 in a height direction, and are thus opposed to each other with the battery device 220 interposed therebetween. The insulating plates 261 and 262 each include one or more of insulating materials including, without limitation, polyimide. Note that the insulating plate 261 has a through hole 261K positioned to overlap a portion or all of the winding center space 220K. FIG. 13 illustrates a case where the through hole 261K is larger than the winding center space 220K in inner diameter and overlaps the entire winding center space 220K.

The sealant 270 is a member protecting a perimeter of the positive electrode lead 251, and is thus a so-called protective tape. The sealant 270 has a tube-like structure to cover the perimeter of the positive electrode lead 251, and includes one or more of insulating polymer compounds including, without limitation, polypropylene, polyethylene terephthalate, and polyimide. The positive electrode lead 251 is thus insulated from the battery can 210 (the cover part 212) and the battery device 220 (the negative electrode 222) via the sealant 270. Note that a range over which the positive electrode lead 251 is to be covered with the sealant 270 is not particularly limited, and may be freely chosen.

In the secondary battery of the cylindrical type also, the battery device 220 is contained inside the container part 211, and the cover part 212 is welded to the container part 211. The electrode terminal 230 is thus disposed inside the recessed part 212P. Accordingly, for a reason similar to that in the case described above in relation to the secondary battery of the button type, it is possible to achieve both an increased energy density and improved manufacturing stability.

In the secondary battery of the cylindrical type, in particular, an internal capacity of the battery can 210 increases as compared with the secondary battery of the button type. This increases the device space volume further, and consequently increases a volumetric energy density further. Accordingly, the battery capacity increases further. It is thus possible to achieve a further improved battery capacity characteristic.

In this case, the battery can 210 is a crimpless can, and therefore, for a reason similar to that described above in relation to the battery can 10, the device space volume increases by an amount saved by not necessitating any special mechanism or device. Accordingly, in this regard also, the energy density per volume increases further, and it is thus possible to achieve a further increased battery capacity.

Note that in a case where the electrode terminal 230 is disposed inside the recessed part 212P with the gasket 240 interposed therebetween as illustrated in FIG. 13, improved safety of the secondary battery is also achievable because the electrode terminal 230 serves as a release valve for releasing an internal pressure of the battery can 210 upon an excessive rise in the internal pressure. In this case, in particular, the safety of the secondary battery is secured because the electrode terminal 230 stably serves as the release valve even if the battery capacity increases, as described above.

Specifically, in normal times, the electrode terminal 230 is fixed to the cover part 212 with the gasket 240 interposed therebetween, and the through hole 212K is thus covered by the electrode terminal 230. As a result, the battery can 210 is sealed, and the battery device 220 is thus sealed inside the battery can 210.

In contrast, upon the occurrence of an abnormal condition, that is, upon an excessive rise in the internal pressure of the battery can 210, an exposed surface of the electrode terminal 230 at the through hole 212K is strongly pushed toward the outside (the upper side) by the internal pressure. In this case, if the internal pressure exceeds a fixation strength (a so-called seal strength) of the electrode terminal 230 to the cover part 212, the electrode terminal 230 is separated in part or in entirety from the cover part 212. As a result, a gap, that is, a release path of the internal pressure, develops between the cover part 212 and the electrode terminal 230, and the internal pressure is thus released through the use of the gap.

In this case, to prevent the cover part 212 from being separated from the container part 211 before the electrode terminal 230 is separated from the cover part 212, that is, to prevent an unintentional rupture of the secondary battery upon the excessive rise in the internal pressure, the fixation strength of the electrode terminal 230 to the cover part 212 is preferably smaller than a welding strength of the cover part 212 to the container part 211.

Factors that contribute to the rise in the internal pressure described above include gas generation due to a decomposition reaction of the electrolytic solution upon charging and discharging. Factors that speed up the decomposition reaction of the electrolytic solution include an internal short circuit of the secondary battery and a discharge of the secondary battery by heating of the secondary battery or under a high-current condition.

Folding the positive electrode lead 251 once or more between the positive electrode 221 and the electrode terminal 230 as described above provides a margin for the length of the positive electrode lead 251. This helps to prevent the electrode terminal 230 from becoming less separable from the cover part 212 by being unintentionally pulled by the positive electrode lead 251 upon the excessive rise in the internal pressure of the battery can 210. This makes it easier for the electrode terminal 230 to serve as the release valve.

Note that the inner diameter of each of the through hole 212K, the recessed part 212P, and the winding center space 220K is not particularly limited and may be freely chosen. FIG. 13 illustrates a case where the inner diameter of the recessed part 212P is greater than the inner diameter of the through hole 212K, and the inner diameter of the through hole 212K is greater than the inner diameter of the winding center space 220K.

In particular, the inner diameter (the maximum inner diameter) of the through hole 212K is preferably greater than the inner diameter (the maximum inner diameter) of the winding center space 220K. A reason for this is that the exposure area of the electrode terminal 230 at the through hole 212K increases. As a result, upon the excessive rise in the internal pressure of the battery can 210, it is easier for the electrode terminal 230 at the through hole 212K to be pushed toward the outside by the internal pressure. This makes it easier for the electrode terminal 230 to serve as the release valve. Further, because a coupling area of the positive electrode lead 251 to the electrode terminal 230 increases, it is easier to secure a state in which the electrode terminal 230 and the positive electrode lead 251 are electrically coupled to each other.

The effects based on the function of releasing the internal pressure described here with reference to FIG. 13 are similarly obtained also in the case of FIG. 9. Specifically, also in the case illustrated in FIG. 9, the electrode terminal 30 is disposed inside the recessed part 12P with the gasket 40 interposed therebetween, and the electrode terminal 30 serves as the release valve upon an excessive rise in the internal pressure. This makes it possible to achieve improved safety of the secondary battery.

### Examples

Examples of the technology are described below.

### (Experiment Examples 1-1 to 1-14)

As described below, the secondary batteries of the present embodiment illustrated in FIGs. 1 to 5 were fabricated and thereafter examined for their capacity characteristics and manufacturing stability.

### [Fabrication of Secondary Battery]

The secondary batteries of the button type were fabricated in accordance with the following procedure.

### (Fabrication of Positive Electrode)

First, 91 parts by mass of the positive electrode active material (lithium cobalt oxide (LiCoO₂)), 3 parts by mass of the positive electrode binder (polyvinylidene difluoride), and 6 parts by mass of the positive electrode conductor (graphite) were mixed together to thereby obtain a positive electrode mixture. Thereafter, the positive electrode mixture was put into an organic solvent (N-methyl-2-pyrrolidone), following which the organic solvent was stirred to thereby prepare a paste positive electrode mixture slurry. Lastly, the positive electrode mixture slurry was applied on each of both sides of the positive electrode current collector (an aluminum foil having a thickness of 12 µm) by means of a coating apparatus, following which the applied positive electrode mixture slurry was dried to thereby form the positive electrode active material layer. In this manner, the positive electrode 21 including the positive electrode current collector and the positive electrode active material layer was fabricated.

### (Fabrication of Negative Electrode)

First, 93 parts by mass of the negative electrode active material (artificial graphite which is a carbon material) and 7 parts by mass of the negative electrode binder (polyvinylidene difluoride) were mixed together to thereby obtain a negative electrode mixture. Thereafter, the negative electrode mixture was put into an organic solvent (N-methyl-2-pyrrolidone), following which the organic solvent was stirred to thereby prepare a paste negative electrode mixture slurry. Lastly, the negative electrode mixture slurry was applied on each of both sides of the negative electrode current collector (a copper foil having a thickness of 15 µm) by means of a coating apparatus, following which the applied negative electrode mixture slurry was dried to thereby form the negative electrode active material layer. In this manner, the negative electrode 22 including the negative electrode current collector and the negative electrode active material layer was fabricated.

### (Preparation of Electrolytic Solution)

The electrolyte salt (lithium hexafluorophosphate (LiPF₆)) was added to the solvent (ethylene carbonate and diethyl carbonate), following which the solvent was stirred. In this case, a mixture ratio (a weight ratio) between ethylene carbonate and diethyl carbonate was set to 30:70, and an electrolyte salt content was set to 1 mol/kg with respect to the solvent. The electrolyte salt was thereby dissolved in the solvent. In this manner, the electrolytic solution was prepared.

### (Assembly of Secondary Battery)

First, the container part 11 of a cylindrical shape and the cover part 12 of a circular plate shape were prepared. The container part 11 included stainless steel (SUS304), and had the opening 11K and a liquid injection hole. The cover part 12 included stainless steel (SUS304). The container part 11 was 12 mm in outer diameter, 5.0 mm in height, and 0.15 mm in thickness. The cover part 12 was 12 mm in outer diameter 12OD. In this case, the thickness (mm) of the cover part 12 was varied as listed in Table 1.

Note that the cover part 12 was provided with the recessed part 12P of a circular shape having the through hole 12K of a circular shape. The recessed part 12P was 8.0 mm in inner diameter 12ID, 0.3 mm in depth, and 66.7% in ratio. The through hole 12K was 2.0 mm in inner diameter. The electrode terminal 30 including aluminum and having a height of 0.15 mm was attached to the recessed part 12P with the gasket 40 (including polypropylene and having a thickness of 0.05 mm) interposed therebetween. The electrode terminal 30 included the terminal part 30A having an outer diameter ODA of 1.9 mm, the terminal part 30B having an outer diameter ODB of 5.0 mm, and the terminal part 30C having an outer diameter ODC of 5.0 mm. Note that the ratio refers to the ratio of the inner diameter 12ID of the recessed part 12P to the outer diameter 12OD of the cover part 12, as described above.

Thereafter, the positive electrode 21 and the negative electrode 22 were stacked on each other with the separator 23 (a fine-porous polyethylene film having a thickness of 15 µm) interposed therebetween, following which the stack of the positive electrode 21, the negative electrode 22, and the separator 23 was wound to thereby fabricate the wound body 120 having the winding center space 20K. Thereafter, the wound body 120 was placed into the container part 11 through the opening 11K. In this case, the negative electrode lead 52 including copper was laser-welded to the battery device 20 (the negative electrode current collector of the negative electrode 22) at one end, and was laser-welded to the container part 11 at the other end.

Thereafter, the cover part 12 was so placed on the container part 11 as to cover the opening 11K. In this case, the positive electrode lead 51 including aluminum was laser-welded to the battery device 20 (the positive electrode current collector of the positive electrode 21) at one end, and was laser-welded to the electrode terminal 30 at the other end.

Thereafter, to crimp the electrode terminal 30 to the cover part 12, the cover part 12 was laser-welded to the container part 11 while pressing the cover part 12 against the container part 11 at a pressure of 0.05 N/mm². The cover part 12 was thereby joined to the container part 11. Thus, the battery can 10 was assembled and the wound body 120 was sealed inside the battery can 10.

Lastly, the electrolytic solution was injected into the battery can 10 through the liquid injection hole, following which the liquid injection hole was sealed. The wound body 120 (the positive electrode 21, the negative electrode 22, and the separator 23) was thereby impregnated with the electrolytic solution. Thus, the battery device 20 having the non-device space 20S (the winding center space 20K) was fabricated. In this manner, the battery device 20 was sealed inside the battery can 10. The secondary battery was thus assembled.

### (Stabilization of Secondary Battery)

The secondary battery was charged and discharged in an ambient temperature environment (at a temperature of 25°C). Upon the charging, the secondary battery was charged with a constant current of 0.1 C until a battery voltage reached 4.2 V, and was thereafter charged with a constant voltage of 4.2 V until a current reached 0.05 C. Upon the discharging, the secondary battery was discharged with a constant current of 0.1 C until the battery voltage reached 3.0 V. Note that 0.1 C is a value of a current that causes a battery capacity (a theoretical capacity) to be completely discharged in 10 hours, and 0.05 C is a value of a current that causes the battery capacity to be completely discharged in 20 hours.

As a result, a film was formed on the surface of, for example, the negative electrode 22 to stabilize the state of the secondary battery. Thus, the secondary battery of the button type was completed.

### [Fabrication of Comparative Secondary Battery]

Note that the secondary batteries of the comparative example illustrated in FIG. 6 were fabricated for comparison. A fabrication procedure of the secondary batteries of the comparative example was similar to that of the secondary batteries of the present embodiment described above except for the following.

The battery can 110 (the container part 111 and the cover part 112) including aluminum was prepared. In this case, as listed in Table 1, the thickness (mm) of the cover part 112 was varied. Note that a minimum thickness of the cover part 112, that is, the thickness of the cover part 112 at the portion thinned to form the recessed part 112P, was set to one-third the thickness of the cover part 112 listed in Table 1. The recessed part 112P included no bending portion of the cover part 112 bending to protrude toward the inside of the container part 111. Thus, a recess diameter (mm) of the recessed part 112P is not listed in Table 1.

Note that the cover part 112 was provided with the recessed part 112P of a circular shape having the through hole 112K of a circular shape. The recessed part 112P was 8.0 mm in inner diameter. The through hole 112K was 2.0 mm in inner diameter. The electrode terminal 130 including stainless steel (SUS304) and having a height of 0.15 mm was attached to the recessed part 112P with the gasket 140 (including polypropylene and having a thickness of 0.05 mm) interposed therebetween. The electrode terminal 130 included the terminal part 130A having an outer diameter of 1.5 mm, the terminal part 130B having an outer diameter of 7.0 mm, and the terminal part 130C having an outer diameter of 5.0 mm. Further, the insulator 150 (including polypropylene and having a thickness of 0.05 mm) and the current collector 160 (including aluminum and having a thickness of 0.1 mm) were provided on an inner surface of the cover part 112.

### [Evaluation of Secondary Battery]

Evaluation of the secondary batteries of the present embodiment for their capacity characteristics and manufacturing stability revealed the results presented in Table 1.

In a case of examining the capacity characteristic, the device space volume (mm³) was logically (mathematically) calculated on the basis of the dimensions of the secondary battery including the thickness of the cover part 12. Here, for ease of comparison between the device space volumes, any influence of the volume of the non-device space 20S (the winding center space 20K) on the device space volume was not taken into account. In other words, for convenience, the volume of the non-device space 20S was included in the device space volume.

In a case of examining the manufacturing stability, after the cover part 12 had been welded to the container part 11, whether the cover part 12 was sufficiently joined to the container part 11 or not was visually examined. In this case, with the number of evaluations taken as 100, a non-defective product rate was calculated as follows: non-defective product rate (%) = (number of non-defective products/number of evaluations) × 100. The "number of non-defective products" refers to the number of the secondary batteries in which the cover part 12 was sufficiently joined to the container part 11.

Note that the secondary batteries of the comparative example were also evaluated for their capacity characteristics (device space volumes) and manufacturing stability (non-defective product rates) in a similar manner.

### [Table 1]

**Table 1**

| Experimen t example | Cover part | | | | Device space volume (mm³) | Non-defective product rate (%) |
|---|---|---|---|---|---|---|
| | Outer diameter (mm) | Thicknes s (mm) | Inner diamete r (mm) | Ratio (%) | | |
| 1-1 | 12 | 0.300 | 8.0 | 66.7 | 442 | 100 |
| 1-2 | | 0.250 | | | 450 | 100 |
| 1-3 | | 0.200 | | | 458 | 100 |
| 1-4 | | 0.150 | | | 466 | 100 |
| 1-5 | | 0.100 | | | 473 | 100 |
| 1-6 | | 0.075 | | | 477 | 100 |
| 1-7 | | 0.050 | | | 481 | 100 |
| 1-8 | 12 | 0.300 | - | 66.7 | 457 | 95 |
| 1-9 | | 0.250 | | | 462 | 93 |
| 1-10 | | 0.200 | | | 468 | 85 |
| 1-11 | | 0.150 | | | 473 | 70 |
| 1-12 | | 0.100 | | | 478 | 50 |
| 1-13 | | 0.075 | | | 481 | 27 |
| 1-14 | | 0.050 | | | 484 | 18 |

### [Discussion]

As indicated in Table 1, the capacity characteristic and the manufacturing stability of the secondary battery greatly varied depending on the configuration of the secondary battery (the cover part 12 or 112).

Specifically, no sufficient non-defective product rate was achieved in a case where the recessed part 112P was formed by the cover part 112 being reduced in thickness in part (Experiment examples 1-8 to 1-14). In this case, in particular, the non-defective product rate gradually decreased with decreasing thickness of the cover part 112.

In contrast, in a case where the recessed part 12P was formed by the cover part 12 bending in part (Experiment examples 1-1 to 1-7), a sufficient non-defective product rate was achieved while achieving a device space volume substantially equal to that in the case where the recessed part 112P was formed by the cover part 112 being reduced in thickness in part (Experiment examples 1-8 to 1-14). In this case, in particular, the non-defective product rate was kept high without depending on the thickness of the cover part 112.

### (Experiment Examples 2-1 to 2-12)

As described in Table 2, secondary batteries were fabricated and evaluated for their capacity characteristics and manufacturing stability by a procedure similar to the above, except that the ratio was varied by changing the inner diameter 12ID of the recessed part 12P with the thickness of the cover part 12 fixed.

### [Table 2]

**Table 2**

| Experimen t example | Cover part | | | | Device space volume (mm³) | Non-defective product rate (%) |
|---|---|---|---|---|---|---|
| | Outer diameter (mm) | Thicknes s (mm) | Inner diamete r (mm) | Ratio (%) | | |
| 2-1 | 12 | 0.100 | 11.4 | 95.0 | 473 | 75 |
| 2-2 | | | 11.1 | 92.5 | 473 | 98 |
| 2-3 | | | 10.8 | 90.0 | 473 | 100 |
| 2-4 | | | 9.6 | 80.0 | 473 | 100 |
| 2-5 | | | 8.4 | 70.0 | 473 | 100 |
| 1-5 | | | 8.0 | 66.7 | 473 | 100 |
| 2-6 | | | 7.2 | 60.0 | 473 | 100 |
| 2-7 | | | 6.0 | 50.0 | 473 | 100 |
| 2-8 | | | 4.8 | 40.0 | 473 | 100 |
| 2-9 | | | 3.6 | 30.0 | 473 | 100 |
| 2-10 | | | 1.8 | 15.0 | 473 | 100 |
| 2-11 | | | 1.2 | 10.0 | 473 | 97 |
| 2-12 | | | 0.9 | 7.5 | 473 | 78 |

As indicated in Table 2, in a case where the recessed part 12P was formed by the cover part 12 bending in part (Experiment examples 1-5 and 2-1 to 2-12), the non-defective product rate further increased if the ratio was within a range from 15.0% to 90.0% both inclusive.

### [Conclusion]

The results presented in Tables 1 and 2 indicate that an increased device space volume was achieved while securing the non-defective product rate in a case where: the battery device 20 was contained inside the container part 11, the cover part 12 was welded to the container part 11, the recessed part 12P was formed by the cover part 12 bending to protrude in part toward the inside of the container part 11, and the electrode terminal 30 was disposed inside the recessed part 12P. Thus, stable manufacturability of the secondary battery was achieved on the basis of the securing of the non-defective product rate, and an increased energy density per unit volume of the secondary battery was achieved on the basis of the increased device space volume. Consequently, both an increased energy density and improved manufacturing stability were achieved.

Although the technology has been described above with reference to some embodiments and examples, the configuration of the technology is not limited to those described with reference to the embodiments and examples above, and is therefore modifiable in a variety of ways.

Specifically, although the description above deals with the case of using a liquid electrolyte (an electrolytic solution), the electrolyte is not limited to a particular kind. Thus, a gel electrolyte (an electrolyte layer) may be used, or an electrolyte in a solid form (a solid electrolyte) may be used.

Further, although the description above deals with the case where the electrode reactant is lithium, the electrode reactant is not particularly limited. Specifically, as described above, the electrode reactant may be another alkali metal such as sodium or potassium, or may be an alkaline earth metal such as beryllium, magnesium, or calcium. Other than the above, the electrode reactant may be another light metal such as aluminum.

The effects described herein are mere examples. Therefore, the effects of the technology are not limited to the effects described herein. Accordingly, the technology may achieve any other effect.

## Claims

1. A secondary battery comprising:
a battery device including a positive electrode and a negative electrode;
a container member containing the battery device inside;
a cover member welded to the container member; and
an electrode terminal provided in the cover member, wherein
the cover member includes a recessed part formed by the cover member bending to protrude in part toward the inside of the container member, and
the electrode terminal is disposed inside the recessed part.

2. The secondary battery according to claim 1, wherein a ratio of an inner diameter of the recessed part to an outer diameter of the cover member is greater than or equal to 15% and smaller than or equal to 90%.

3. The secondary battery according to claim 1 or 2, wherein
the cover member has a first outer end face around the recessed part,
the electrode terminal has a second outer end face exposed from the recessed part, and
in a protruding direction in which the cover member protrudes in part toward the inside of the container member, the second outer end face lies at a position coinciding with a position of the first outer end face or at a position forward of the position of the first outer end face in the protruding direction.

4. The secondary battery according to any one of claims 1 to 3, wherein
the battery device has a space inside, the space communicating with an outside, and
the cover member is welded to the container member on a side of the cover member facing the space.

5. The secondary battery according to claim 4, wherein
the positive electrode and the negative electrode are wound while being opposed to each other, and
the space comprises a winding center space present at a winding core part of the positive electrode and the negative electrode.

6. The secondary battery according to claim 4 or 5, further comprising a coupling wiring line disposed inside the space and coupled to one of the positive electrode or the negative electrode and to the electrode terminal.

7. The secondary battery according to any one of claims 1 to 6, wherein
the cover member has a through hole in the recessed part, and
the electrode terminal includes:
a first terminal part extending through the through hole and having an outer diameter smaller than an inner diameter of the through hole;
a second terminal part coupled to the first terminal part inside the recessed part and having an outer diameter greater than the inner diameter of the through hole; and
a third terminal part coupled to the first terminal part inside the container part and having an outer diameter greater than the inner diameter of the through hole.

8. The secondary battery according to claim 7, wherein the outer diameter of the second terminal part is greater than the outer diameter of the third terminal part.

9. The secondary battery according to any one of claims 1 to 8, wherein
the electrode terminal is coupled to one of the positive electrode or the negative electrode, and
the container member is coupled to another of the positive electrode or the negative electrode.

10. The secondary battery according to claim 9, further comprising an insulating member disposed between the cover member and the electrode terminal.

11. The secondary battery according to any one of claims 1 to 10, wherein the secondary battery comprises a flat and columnar secondary battery.
